# EUROPÄISCHE PATENTSCHRIFT

(11) **EP 2 204 715 B1**
(45) Veröffentlichungstag und Bekanntmachung des Hinweises auf die Patenterteilung: **26.09.2018**
(21) Anmeldenummer: 09014476.7
(22) Anmeldetag: 20.11.2009
(51) Int. Cl.: G05B 23/02, G05B 9/02, G05B 15/02, F02D 41/22, F02D 41/26, F02D 41/24

(54) **Manipulationsschutz an einer Brennkraftmaschine**
Manipulation protection for a combustion engine
Protection contre la manipulation sur un moteur à combustion interne

(30) Priorität: 29.11.2008 DE 102008059684
(43) Veröffentlichungstag der Anmeldung: 07.07.2010
(73) Patentinhaber: DEUTZ Aktiengesellschaft, 51149 Köln (DE)
(72) Erfinder: Brardt, Jürgen, 53804 Much (DE)

(56) Entgegenhaltungen:
- DE-A1- 10 020 977
- DE-A1- 10 238 093
- DE-A1-102007 012 477

## Beschreibung

Die Erfindung betrifft ein Verfahren zum Betreiben einer Brennkraftmaschine mit einem elektronischen Steuergerät, das Informationen über den Zustand der Brennkraftmaschine mittels Sensoren erfasst und die Brennkraftmaschine steuert und regelt, wobei eine in dem Steuergerät abgelegte Software aus den Informationen unter Einhaltung der maximal zulässigen Leistung zum Schutz der Brennkraftmaschine und zur Einhaltung der Abgasgesetzgebung die maximale Kraftstoffmenge berechnet, wodurch die maximale Leistung und das maximale Drehmoment der Brennkraftmaschine bestimmt wird.

Ein derartiges Verfahren beziehungsweise Vorgehen ist bekannt und wird standardmäßig zum Betreiben einer Brennkraftmaschine verwendet. Dabei ist zu beachten, dass zumindest sehr ähnliche Brennkraftmaschinen einer Baureihe für unterschiedliche zulässige Leistungen vom Hersteller der jeweiligen Brennkraftmaschine freigegeben sein können. Die Freigabe hängt von dem jeweiligen Einsatz der Brennkraftmaschine ab, gegebenenfalls unter zusätzlicher Berücksichtigung der für den jeweiligen Einsatz einzuhaltenden Abgasgesetzgebung. Beispielsweise werden Brennkraftmaschinen, die bei bestimmungsgemäßem Einsatz häufig im Bereich der jeweiligen maximal zulässigen Leistung eingesetzt werden, mit einer geringeren zulässigen maximalen Leistung freigegeben als die gleiche Brennkraftmaschine, die bei bestimmungsgemäßem Einsatz ganz überwiegend im Bereich von Teillast eingesetzt wird. Ein Beispiel für den ersteren Fall ist die Verwendung bzw. der Einsatz der Brennkraftmaschine bei einem landwirtschaftlichem Gerät, insbesondere einem Schlepper. Hier ist ein häufiger Volllastbetrieb (beispielsweise beim Pflügen) üblich.

Die in dem Steuergerät abgelegten maximal zulässigen Leistungsinformationen sind gegen einen unberechtigten Zugriff gesichert, so dass diese normalerweise nicht verändert oder manipuliert werden können. Es ist aber denkbar, dass ein komplettes Steuergerät gegen ein anderes Steuergerät ausgetauscht wird, in dem andere für einen anderen bestimmungsgemäßen Einsatz bestimmte Leistungsinformationen zur Steuerung der Brennkraftmaschine abgelegt sind. Dies hat zur Folge, dass beispielsweise durch den Austausch des Steuergeräts die maximal abgebbare Leistung der Brennkraftmaschine angehoben wird und/oder andere Abgasgrenzwerte erfüllt werden.

DE102007012477 beschreibt eine Veränderungserkennungs und Veränderungsschutzvorrichtung. Der Erfindung liegt die Aufgabe zugrunde, eine solche Manipulation zu verhindern.

Diese Aufgabe wird dadurch gelöst, dass zumindest eine mit dem Steuergerät korrespondierende Brennkraftmaschinenkomponente ein individuelles Merkmal aufweist, das von dem Steuergerät auslesbar ist und/oder dass das Steuergerät ein individuelles Merkmal aufweist, das von der Brennkraftmaschinenkomponente erkennbar ist. Das individuelle Merkmal kann beispielsweise auch eine vom Hersteller der Brennkraftmaschinenkomponente vergebene laufende Nummer, Buchstaben Nummer Kombination oder etwas anderes sein, was die Brennkraftmaschinenkomponente individuell auszeichnet. Zunächst einmal kann die Brennkraftmaschinenkomponente ein Sensor, ein Aktuator oder eine andere (mit dem Steuergerät kommunizierende) Komponente an der Brennkraftmaschine oder aber eine zugehörige Aufbereitungselektronik zu der jeweiligen Brennkraftmaschinenkomponente sein. Diese Brennkraftmaschinenkomponente und/oder das Steuergerät weisen jeweils ein individuelles Merkmal auf, das eine eindeutige Identifizierung zueinander ermöglicht. Diese Identifizierung wird beispielsweise bei jedem Brennkraftmaschinenstart durchgeführt. Wird beispielsweise bei einer Sensoridentifizierung eine Nichtübereinstimmung festgestellt, kann je nach Wichtigkeit eine Fehlermeldung, eine Leistungsreduktion der Brennkraftmaschine oder eine Abschaltung der Brennkraftmaschine eingeleitet werden. Das heißt, wenn beispielsweise ein einzelner Sensor gegen einen anderen, möglicherweise manipulierten, Sensor ausgetauscht wird, wird dies sofort erkannt, da das Steuergerät nicht das erwartete individuelle Merkmal auslesen kann und es kann eine entsprechende Reaktion eingeleitet werden. Insbesondere wird aber sofort erkannt, ob das Steuergerät gegen ein anderes Steuergerät (mit anderen Leistungsinformationen) ausgetauscht worden ist und/oder Brennkraftmaschinenkomponenten gegen nicht zugehörige ausgetauscht worden sind. Das andere Steuergerät erwartet ein anderes individuelles Merkmal der Brennkraftmaschinenkomponente, weil es für eine andere Brennkraftmaschine mit einer anderen Brennkraftmaschinenkomponente vorgesehen ist. Für diesen Fall ist normalerweise vorgesehen, einen Start der Brennkraftmaschine mit einem entsprechenden Eintrag in einen Fehlerspeicher zu verhindern. Um ein Auslesen des jeweiligen individuellen Merkmals beziehungsweise des entsprechenden Signals zu verhindern, kommuniziert das Steuergerät mit der oder den Brennkraftmaschinenkomponente(n) über eine verschlüsselte Datenkommunikation. Dadurch wird eine Manipulation des entsprechenden Signals ausgeschlossen, da der Verschlüsselungscode dem möglichen Manipulator unbekannt ist. Die Verschlüsselung ist in dem Steuergerät und/ oder der Brennkraftmaschinenkomponente beziehungsweise einer zugehörigen Komponentenaufbereitungselektronik abgelegt. Dabei ist die Verschlüsselung so angelegt, dass diese sich bevorzugt selbsttätig ändert.

In weiterer Ausgestaltung kommuniziert die Brennkraftmaschinenkomponente beziehungsweise die Komponentenaufbereitungselektronik mit dem Steuergerät über insbesondere einen CAN-Bus. Der besondere Vorteil eines CAN-Busses ist es, dass über einen einzigen Kabelstrang eine Vielzahl von Daten übermittelt werden können. Der Nachteil ist aber, dass die Daten als solche direkte Rückschlüsse zu entsprechenden Messwerten oder individuellen Merkmalen zulassen und daher einfach auszulesen sind. Dies wird aber durch die Verschlüsselung verhindert. Das oder die individuellen Merkmale können von autorisierten Personen beispielsweise bei einem Austausch einer defekten Brennkraftmaschinenkomponente neu programmiert werden.

In weiterer Ausgestaltung ist vorgesehen, zusätzlich zu den verschlüsselten Informationen über den Zustand der Brennkraftmaschine (also den eigentlichen von beispielsweise den Sensoren ermittelten Messwerten wie Temperatur oder Druck) die gleichen Informationen unverschlüsselt an das Steuergerät zu senden. Dies ist dann sinnvoll, wenn für die Steuerung und Regelung der Brennkraftmaschine eine sehr schnelle Übermittlung von Informationen und daran anschließend eine sofortige Aufbereitung bzw. Auswertung in dem Steuergerät erfolgt. Um hierbei gegebenenfalls auftretende Verzögerungen durch eine verschlüsselte Übertragung zu vermeiden, wird zunächst die Steuerung bzw. Regelung der Brennkraftmaschine mit den unverschlüsselt übermittelten Informationen vorgenommen, dann anschließend werden aber die entsprechenden verschlüsselten und unverschlüsselten Informationen miteinander verglichen und bei Auftreten von einer Differenz größer einem vorgegebenen Grenzwert wird ein Fehlereintrag in einen entsprechenden Speicher eingeschrieben und/oder eine Leistungsreduzierung der Brennkraftmaschine eingestellt und/oder eine Stillsetzung der Brennkraftmaschine veranlasst. Die verschlüsselte Übertragung erfolgt bevorzugt über den CAN-Bus, während die unverschlüsselte Übermittlung über normale (schnelle) Datenleitung erfolgt. Zu Datenleitungen gehören in diesem Zusammenhang auch normale Leitungen mit analogen Spannungen. Diese Funktion stellt eine zusätzliche Sicherung dar.

## Patentansprüche

1. Verfahren zum Betreiben einer Brennkraftmaschine mit einem elektronischen Steuergerät, das Informationen über den Zustand der Brennkraftmaschine mittels Sensoren erfasst und die Brennkraftmaschine steuert und regelt, wobei eine in dem Steuergerät abgelegte Software aus den Informationen unter Einhaltung der maximal zulässigen Leistung zum Schutz der Brennkraftmaschine und zur Einhaltung der Abgasgesetzgebung die maximale Kraftstoffmenge berechnet, wodurch die maximale Leistung und das maximale Drehmoment der Brennkraftmaschine bestimmt wird, **dadurch gekennzeichnet, dass** zumindest eine mit dem Steuergerät korrespondierende Brennkraftmaschinenkomponente ein individuelles Merkmal aufweist, das von dem Steuergerät auslesbar ist und/oder dass das Steuergerät ein individuelles Merkmal aufweist, das von der Brennkraftmaschinenkomponente erkennbar ist.

2. Verfahren nach Anspruch 1,
**dadurch gekennzeichnet, dass** die mit dem Steuergerät korrespondierende Brennkraftmaschinenkomponente mittels einer verschlüsselten Datenkommunikation mit dem Steuergerät kommuniziert.

3. Verfahren nach Anspruch 1 oder 2,
**dadurch gekennzeichnet, dass** das Steuergerät das ausgelesene Signal des individuellen Merkmals mit einem abgelegten Signal vergleicht und bei einer Nichtübereinstimmung eine Handlung veranlasst und/oder dass die Brennkraftmaschinenkomponente aufgrund des erkannten Signals des Steuergeräts feststellt, ob das Steuergerät zu der Brennkraftmaschine gehört und bei einer Nichtzugehörigkeit eine Handlung durch das Steuergerät veranlasst.

4. Verfahren nach Anspruch 3,
**dadurch gekennzeichnet, dass** die Handlung eine Fehlermeldung und/oder eine Leistungsreduktion der Brennkraftmaschine und/oder eine Abschaltung der Brennkraftmaschine ist.

## Claims

1. Method for operating an internal combustion engine with an electronic control unit which acquires information about the state of the internal combustion engine by means of sensors and performs open-loop and closed-loop control of the internal combustion engine, wherein software which is stored in the control unit calculates from the information the maximum quantity of fuel while maintaining the maximum permissible power in order to protect the internal combustion engine and to comply with the exhaust gas legislation, as a result of which the maximum power and the maximum torque of the internal combustion engine are determined,
**characterized in that** at least one internal combustion engine component which corresponds to the control unit has an individual feature which can be read by the control unit, and/or **in that** the control unit has an individual feature which can be detected by the internal combustion engine component.

2. Method according to Claim 1,
**characterized in that** the internal combustion engine component which corresponds to the control unit communicates with the control unit by means of an encrypted data communication.

3. Method according to Claim 1 or 2,
**characterized in that** the control unit compares the read-out signal of the individual feature with a stored signal, and when they do not correspond, said control unit brings about an action, and/or **in that** the internal combustion engine component determines, on the basis of the detected signal of the control unit, whether the control unit is associated with the internal combustion engine, and when it is not associated, said internal combustion engine componment brings about an action by means of the control unit.

4. Method according to Claim 3,
**characterized in that** the action is a fault message and/or a power reduction of the internal combustion engine and/or a deactivation of the internal combustion engine.

## Revendications

1. Procédé pour faire fonctionner un moteur à combustion interne comprenant un contrôleur électronique qui détecter des informations à propos de l'état du moteur à combustion interne au moyen de capteurs et qui commande et régule le moteur à combustion interne, un logiciel enregistré dans le contrôleur calculant la quantité de carburant maximale à partir des informations en respectant la puissance maximale admissible pour protéger le moteur à combustion interne et en respectant la législation relative aux gaz d'échappement, la puissance maximale et le couple maximal du moteur à combustion interne étant ainsi déterminés,
**caractérisé en ce qu'**au moins un composant de moteur à combustion interne correspondant au contrôleur possède une caractéristique individuelle qui peut être relevée par le contrôleur et/ou **en ce que** le contrôleur possède une caractéristique individuelle qui est reconnaissable par le composant de moteur à combustion interne.

2. Procédé selon la revendication 1, **caractérisé en ce que** le composant de moteur à combustion interne correspondant au contrôleur communique avec le contrôleur au moyen d'une communication de données cryptée.

3. Procédé selon la revendication 1 ou 2,
**caractérisé en ce que** le contrôleur compare le signal relevé de la caractéristique individuelle avec un signal enregistré et initie une action en cas de non-concordance et/ou **en ce que** le composant de moteur à combustion interne, sur la base du signal reconnu du contrôleur, définit si le contrôleur fait partie du moteur à combustion interne et, en cas de non-appartenance, initie une action par le contrôleur.

4. Procédé selon la revendication 3, **caractérisé en ce que** l'action est un message d'erreur et/ou une réduction de puissance du moteur à combustion interne et/ou un arrêt du moteur à combustion interne.
